# EUROPÄISCHE PATENTSCHRIFT

(11) **EP 3 102 900 B1**
(45) Veröffentlichungstag und Bekanntmachung des Hinweises auf die Patenterteilung: **04.04.2018**
(21) Anmeldenummer: 15703456.2
(22) Anmeldetag: 05.02.2015
(51) Int. Cl.: F28F 9/02, F28D 9/00, F25B 37/00, F28D 21/00

(54) **ZUM WÄRME- UND/ODER STOFFAUSTAUSCH GEEIGNETER PLATTENAPPARAT**
PLATE DEVICE SUITABLE FOR EXCHANGING HEAT AND/OR MATERIALS
APPAREIL À PLAQUES ADAPTÉ À L'ÉCHANGE DE CHALEUR ET/OU DE SUBSTANCES

(30) Priorität: 06.02.2014 DE 102014001499
(43) Veröffentlichungstag der Anmeldung: 14.12.2016
(73) Patentinhaber: Api Schmidt-Bretten Gmbh&co. Kg, 75015 Bretten (DE)
(72) Erfinder: WAGNER, Volker, 75417 Muhlacker (DE); MERKEL, Nina, 76131 Karlsruhe (DE); SCHABER, Karlheinz, 76316 Malsch (DE)
(74) Vertreter: Lemcke, Brommer & Partner Patentanwälte Partnerschaft mbB
(86) Internationale Anmeldenummer: PCT/EP2015/000236
(87) Internationale Veröffentlichungsnummer: WO 2015/117759

(56) Entgegenhaltungen:
- WO-A1-2009/062738
- DE-A1- 19 734 131
- DE-U1-202008 004 582
- FR-A1- 2 993 647
- JP-A- 2002 022 309
- US-A1- 2003 010 483

## Beschreibung

Die Erfindung betrifft einen zum Wärme- und/oder Stoffaustausch geeigneten Plattenapparat mit einer Vielzahl fluchtend längs einer Umfangsdichtung unter Bildung jeweils eines Zwischenraumes aneinander liegender Platten, die obere und untere Durchströmöffnungen für Fluide aufweisen, wobei eine Gruppe dieser oberen und unteren Durchströmöffnungen zumindest zwei zu vermischenden Fluiden zugeordnet und durch entsprechend verlegte Dichtungen mit jedem zweiten Platten-Zwischenraum verbunden ist, der von oben nach unten durchströmt wird und wobei in fluchtenden oberen Durchströmöffnungen der genannten Gruppe eine sie durchquerende Verteillanze mit Austrittsöffnungen für zumindest ein Fluid, verläuft.

Soweit hier und im Folgenden die Begriffe "Dichtung" oder "abgedichtet" oder dergleichen verwendet werden, soll dies nicht nur separate, eigenständige Dichtungen zwischen benachbarten Platten betreffen, sondern auch die stoffschlüssige Verbindung von Platten durch Verschweißung oder Verlötung - also ohne zusätzliche Dichtung - beinhalten.

Die Erfindung basiert auf den an sich bekannten Plattenwärmetauschern, bei denen die Durchströmöffnungen so gegenüber den Platten-Zwischenräumen abgedichtet sind, dass jeder zweite Plattenzwischenraum von dem einen Fluid und die dazwischenliegenden Plattenzwischenräume von dem anderen Fluid durchströmt werden. Beispielhalber wird auf die DE 103 22 406 der gleichen Anmelderin verwiesen, deren Inhalt in Bezug genommen und somit auch zum Inhalt der vorliegenden Anmeldung gemacht wird. In dieser Anmeldung wird bereits eine möglichst gleichmäßige Beaufschlagung des Plattenspaltes durch das einströmende Medium thematisiert. Dazu wird vorgeschlagen, an der Einströmseite der Platte eine Vielzahl von Einströmöffnungen vorzusehen, die sich über die gesamte Breite der Platte erstrecken und somit eine gleichmäßigere Beaufschlagung des Plattenspaltes über seine Breite bewirken.

Daneben besteht mitunter das Bedürfnis, jeden zweiten Platten-Zwischenraum mit zwei unterschiedlichen Phasen eines Fluids zu beaufschlagen, nämlich sowohl mit der flüssigen wie auch mit der gasförmigen Phase. In diesem Fall muss vor allem bei der Flüssigkeitsphase dafür gesorgt werden, dass eine gleichmäßige Verteilung auf die zugeordneten Plattenzwischenräume gewährleistet ist. Hierzu schlägt die DE 1 269 144 oder die FR-A-2993647 von der die vorliegende Anmeldung im Oberbegriff des Anspruches 1 ausgeht, vor, in oberen Durchströmöffnungen eine Verteillanze in Form eines Sprührohres anzuordnen. Dieses Sprührohr weist radial verlaufende Sprühöffnungen auf, durch welche die Flüssigkeit unter Durchquerung des umgebenden Gasraumes den ihr zugeordneten Platten-Zwischenräumen zugeführt wird. Auf diese Weise wird vor und im Platten-Zwischenraum eine Durchmischung der Flüssigkeitsphase mit der Gasphase herbeigeführt.

Der vorliegenden Erfindung liegt die Aufgabe zugrunde, die Durchmischung beider Phasen weiter zu verbessern, insbesondere eine Benetzung der Plattenoberfläche durch die Flüssigkeitsphase über die gesamte Plattenbreite zu gewährleisten. Dabei soll eine große Kontaktfläche zwischen beiden Fluiden herbeigeführt werden, so dass nicht nur physikalische Reaktionen, insbesondere Absorptionsvorgänge, sondern auch chemische Reaktionen zwischen beiden Fluiden begünstigt werden. Im Ergebnis soll die vorliegende Erfindung nicht nur für die Vermischung und Reaktion von flüssiger und gasförmiger Phase des gleichen Mediums, sondern auch unterschiedlicher Medien geeignet sein. Nicht zuletzt soll sich die Erfindung durch kompakten und kostengünstigen Aufbau auszeichnen.

Diese Aufgabe wird erfindungsgemäß dadurch gelöst, dass die Austrittsöffnungen der Verteillanze in diejenigen Plattenzwischenräume gerichtet sind, die zwischen den genannten zweiten Plattenzwischenräumen angeordnet sind.

Somit sind die Austrittsöffnungen für die zu vermischenden Fluide nicht auf die zugeordneten, sondern auf die benachbarten "falschen" Plattenzwischenräume gerichtet. Diese benachbarten Plattenzwischenräume sind hinsichtlich ihres der Wärmeübertragung dienenden Bereiches, also hinsichtlich des wesentlichen Teiles des Plattenzwischenraumes gegenüber den zu vermischenden Fluiden in der üblichen Weise durch Dichtungen abgesperrt. Somit können die genannten Fluide nur in den oberen Randbereich der "falschen" Plattenzwischenräume einströmen, nämlich nur bis zu der genannten Dichtung, die im Allgemeinen einige Millimeter bis wenige Zentimeter unterhalb der oberen Durchströmöffnung verläuft. Dadurch staut sich die Fluidmischung, insbesondere ihre flüssige Phase, oberhalb der genannten Dichtung, bis das Flüssigkeitsniveau an den unteren Rand der darüber liegenden Durchströmöffnungen ansteigt. Sodann kann die Flüssigkeit durch diese Durchströmöffnungen in den "richtigen" offenen Plattenzwischenraum hineinströmen. Die Durchströmöffnungen bilden also gewissermaßen ein Wehr, das die Flüssigkeit im "falschen" Plattenzwischenraum aufstaut, so dass die Flüssigkeit erst bei ausreichender Füllmenge in die ihr zugeordneten "richtigen" Plattenzwischenräume überlaufen kann. Dadurch kommt es zu einer drucklosen Verteilung der Flüssigkeit auf die "richtigen" Plattenzwischenräume und einer optimalen Dünnfilm-Benetzung beim Herunterfließen.

Die Verwendung der Durchströmöffnungen als Wehre führt dazu, dass die Flüssigkeit optimal in den Plattenzwischenräumen verteilt wird, und zwar nicht nur durch Benetzung der ganzen Plattenbreite, sondern auch hinsichtlich der gleichmäßigen Beaufschlagung der in Lanzenrichtung aufeinanderfolgenden Plattenzwischenräume.

Gleichzeitig kommt es zu einer Vergrößerung der Kontaktfläche zwischen den beiden Fluiden, wodurch Reaktionen zwischen beiden Fluiden deutlich beschleunigt werden. Bei solchen Reaktionen kann es sich um Absorptionsvorgänge handeln, insbesondere wenn das eine Fluid in flüssiger Phase, das andere Fluid in gasförmiger Phase vorliegt; ebenso kann es sich aber auch um chemische Reaktionen handeln. In beiden Fällen kann durch Heiz- oder Kühlmedien, die durch die benachbarten Plattenzwischenräume fließen, Wärme zu- oder abgeführt werden, je nachdem, ob es sich um einen endothermen oder exothermen Vorgang handelt.

Der erfindungsgemäße Plattenapparat erschließt dadurch völlig neue Anwendungsmöglichkeiten in der physikalischen und chemischen Verfahrenstechnik.

Es liegt aber auch im Rahmen der Erfindung, insbesondere bei adiabatischen Vorgängen, diejenigen Plattenzwischenräume, die üblicherweise von einem Heiz- oder Kühlmedium durchströmt werden, still zu legen und sie allein zur Bildung der gewünschten Wehre zu benutzen.

Besonders zweckmäßig ist es, wenn die Austrittsöffnungen der Verteillanze direkt in den genannten Plattenzwischenräumen angeordnet sind. Sie brauchen dann nicht schräg verlaufen, sondern können radial ausgerichtet sein, wodurch die Treffsicherheit deutlich erhöht wird und insbesondere auch unabhängig von der Ausströmgeschwindigkeit der Flüssigkeit ist.

Zur besseren Ausnutzung der Stauwehr-Funktion ist es zweckmäßig, dass die Durchströmöffnungen, in denen die Verteillanze verläuft, zumindest im unteren Bereich nicht die übliche runde Kontur aufweisen, sondern stattdessen einen etwa horizontalen Rand, der deutlich oberhalb seiner zugeordneten Dichtung verläuft und sich zumindest über etwa 60 %, vorzugsweise zumindest etwa 75 % der maximalen Breite der Durchströmöffnung erstreckt.

Des Weiteren empfiehlt es sich, dass die Platten unterhalb der die Verteillanze umgebenden Durchströmöffnungen zumindest eine deutlich kleinere Entleerungsöffnung aufweisen. Sie hat die Aufgabe, dass aufgestaute Flüssigkeit noch in den "richtigen" Plattenzwischenraum ablaufen kann, wenn der Plattenapparat nicht mehr betrieben wird. Die Entleerungsöffnungen sollten daher im tiefsten Bereich unmittelbar über der die Durchströmöffnungeri umgebenden Dichtung positioniert sein.

Da die Verteillanze einen viel geringeren Durchmesser aufweist als die sie umgebenden Durchströmöffnungen empfiehlt es sich, dass sie nur von der flüssigen Phase durchströmt wird, wogegen die Gas-Phase in dem die Verteillanze umgebenden Ringraum strömt. Handelt es sich jedoch bei beiden Fluiden um Flüssigkeiten, so empfiehlt es sich, die zähflüssigere und/oder spezifisch schwerere Flüssigkeit der Verteillanze zuzuführen.

Bei dem bevorzugten Einsatz des Plattenapparates für die Absorption eines Kältemittels im Rahmen einer Absorptionskältemaschine oder Absorptionswärmepumpe ist es zweckmäßig, Kältemitteldampf durch eine Flüssigkeit zu absorbieren. Dabei werden die benachbarten Plattenzwischenräume von einem Kühlmittel durchströmt, das die bei der Absorption entstehende Wärme aufnimmt und abführt.

In denjenigen Einsatzfällen, bei denen keine exothermen oder endothermen Reaktionen im Plattenapparat erfolgen, empfiehlt es sich, dass die an ein Heiz- oder Kühlmedium anschließbaren Plattenzwischenräume, die in diesem Fall stillgelegt sind, Abstandhalter enthalten, die sicherstellen, dass sich die benachbarten, Fluid-durchströmten Plattenzwischenräume nicht ausbeulen.

Die Abstandhalter sind zweckmäßig durch Wellenprofile gebildet, die sich streifenartig durch den abzustützenden Plattenzwischenraum erstrecken.

Eine andere zweckmäßige Weiterbildung der Erfindung besteht darin, dass die sogenannten zweiten Plattenzwischenräume, also diejenigen, wo physikalische oder chemische Vorgänge bzw. Reaktionen zwischen mehreren Fluiden stattfinden sollen, eine größere Spaltdicke aufweisen als die benachbarten Plattenzwischenräume. Das Verhältnis der Spaltdicken liegt in Anpassung an die unterschiedlichen Volumenströme zweckmäßig zwischen 1:1 bis 1:2.

Zur weiteren Vergrößerung der Kontaktfläche zwischen den beiden miteinander zu vermischenden Fluiden empfiehlt es sich in Weiterbildung der Erfindung, in dem ihnen zugeordneten Plattenzwischenraum eine wellenförmig verlaufende Zwischenlage vorzusehen, die an ihren Wellenbergen an zumindest einer Platte, vorzugsweise an beiden Platten anliegt und von einer Vielzahl von Löchern durchsetzt ist. Dadurch werden die Fluide beim Herunterströmen durch den Plattenzwischenraum einer ständigen Verwirbelung und Vermischung unterzogen. Gleichzeitig kann diese Zwischenlage als Abstandhalter fungieren je nachdem welche Druckdifferenzen zwischen benachbarten Plattenzwischenräumen bestehen.

Bevorzugte Anwendungen des erfindungsgemäßen Plattenapparates sind in den Ansprüchen 16 bis 20 definiert. Dabei kommt der Hauptvorteil der Erfindung zum Tragen, dass nämlich Medien, deren Viskosität stark unterschiedlich ist, optimal in den ihnen zugeordneten Plattenzwischenräumen vermischt werden, weil das Überlaufwehr die etwa punktuelle Flüssigkeitsströmung in eine breite Flüssigkeitsverteilung über die Plattenbreite bereits im Einlaufbereich bewirkt.

Energetisch besonders günstig ist dabei, dass die Verteilung des Fluides mit der höheren Viskosität auf die einzelnen Plattenspalte nicht mehr wie bisher durch hohe Drücke und entsprechende Druckverluste in der Verteillanze herbeigeführt werden muss.

Weitere Merkmale und Vorteile der Erfindung ergeben sich aus der nachfolgenden Beschreibung eines Ausführungsbeispieles und aus der Zeichnung; dabei zeigt:
- Figur 1: eine Draufsicht auf eine Platte des Plattenapparates;
- Figur 2: einen vergrößerten Vertikalschnitt durch mehrere nebeneinander angeordnete Platten;
- Figur 3: einen Querschnitt längs der Linie III-III in Figur 2;
- Figur 4: einen Horizontalschnitt durch einige benachbarte Platten und
- Figur 5: ein Schrägbild eines Plattenapparates;
- Figur 6: die Anwendung des Plattenapparates im Rahmen eines Absorptionskreislaufes.

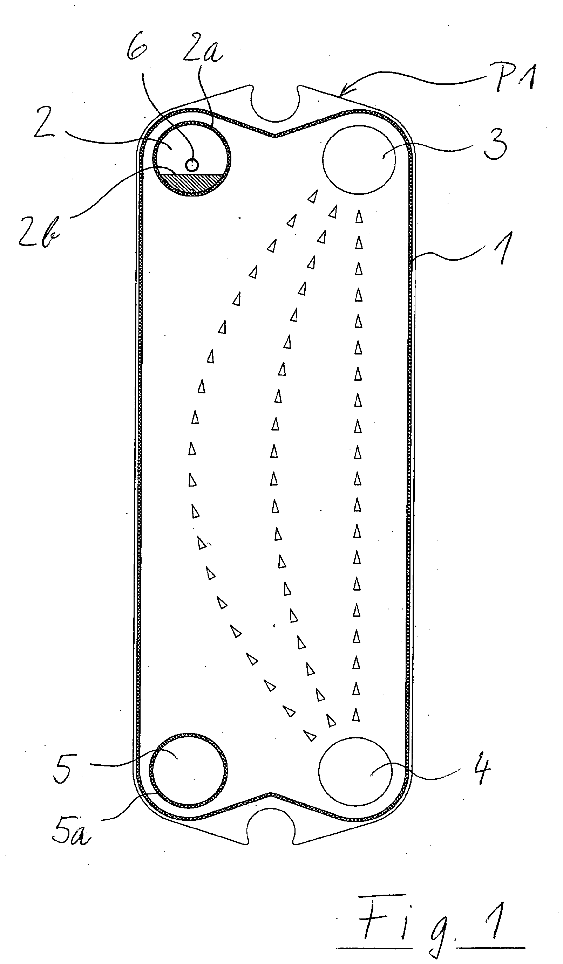

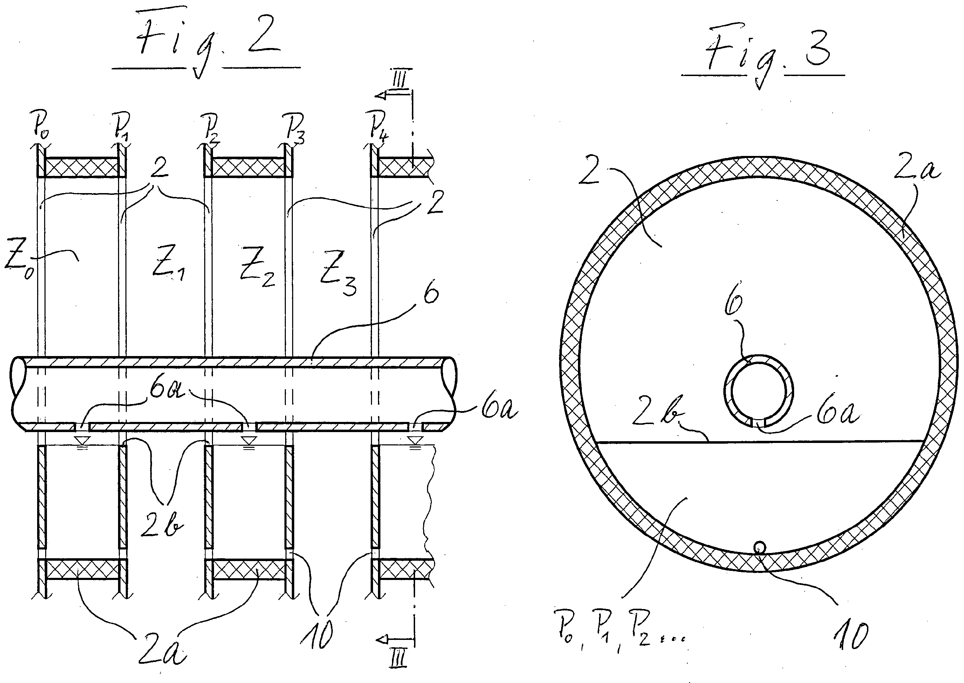

Figur 1 zeigt eine Draufsicht auf eine Platte P₁ eines herkömmlichen Plattenwärmetauschers. Sie weist an ihrem äußeren Umfang eine umlaufende Randabdichtung 1 und an ihren vier Eckbereichen die vier üblichen Durchströmöffnungen 2, 3, 4 und 5 auf. Dabei sind zwei oben/unten gegenüberliegende Durchströmöffnungen - hier die Durchströmöffnungen 2 und 5 - durch Dichtringe 2a und 5a gegenüber der sichtbaren Wärmeübertragungsfläche der Platte abgesperrt, wogegen die beiden anderen Durchströmöffnungen 3 und 4 ihr gegenüber offen sind, so dass das in diesen Durchströmöffnungen strömende Fluid die sichtbare Plattenfläche benetzen kann, wie dies durch die eingezeichneten Pfeile angedeutet wird. Die sichtbare Plattenseite gehört also zu einem Plattenzwischenraum Z₀ oder Z₂ in Figur 2, der üblicherweise von einem Heiz- oder Kühlmittel durchströmt wird.

Hinter der gezeigten Platte P₁ befindet sich hingegen ein Zwischenraum Z₁ oder Z₃ (vgl. Figur 2) der den zu vermischenden Fluiden zugeordnet ist. Daher sind dort die Durchströmöffnungen 3 und 4 von Dichtungen umgeben, wogegen die Dichtungen 2a und 5a an der Rückseite der gezeigten Platte fehlen.

Des Weiteren erkennt man in Figur 1 und 2, dass in den oberen Durchströmöffnungen 2 eine Verteillanze 6 mit wesentlich geringerem Durchmesser angeordnet ist. Diese Verteillanze 6 läuft, wie Figur 2 zeigt, axial durch die Durchströmöffnungen 2 benachbarter Platten P₀, P₁, P₂, P₃, P₄ hindurch. In denjenigen Plattenzwischenräumen, die nicht den zu vermischenden Fluiden zugeordnet sind, also in den "falschen" Plattenzwischenräumen Z₀ und Z₂ weist die Verteillanze 6 jeweils nach unten ragende Austrittsöffnungen 6a auf.

Beim Betrieb des Plattenwärmetauschers werden die Durchströmöffnungen 2 von einem ersten Fluid, meist einem Gas, und die Verteillanze 6 von einem zweiten Fluid, im Allgemeinen einer Flüssigkeit, durchströmt. Während die Aufteilung des gasförmigen ersten Fluids auf die richtigen Plattenzwischenräume problemlos erfolgt, wird das flüssige Fluid mittels der Verteillanze 6 zunächst den "falschen" Plattenzwischenräumen Z₀, Z₂ zugeführt, bei denen die Durchströmöffnungen 2 von den genannten Dichtungen 2a umgeben sind. Somit füllen sich diese "falschen" Plattenzwischenräume solange mit Flüssigkeit, bis der untere Rand der Durchströmöffnungen 2 erreicht ist. Dieser Zustand ist in Figur 2 und 3 dargestellt.

Bei weiterem Zulauf von Flüssigkeit fungieren die Plattenbereiche innerhalb der Dichtung 2a als Wehre, über welche die Flüssigkeit beidseitig in die "richtigen" Plattenspalte als dünner Film nach unten fließt. Dabei sind die unteren Ränder der Durchströmöffnungen 2 durch gerade, horizontal verlaufende Randabschnitte 2b gebildet, damit die Überströmung bereits mit einer gewissen Breite beginnt. Die Randabschnitte 2b verlaufen dabei auf einem Höhenniveau, das vorzugsweise oberhalb des halben Abstandes zwischen dem unteren Rand der Dichtung 2a einerseits und der Verteillanze 6 andererseits liegt.

Bei sehr großen Plattenpaketen mit langen Verteillanzen 6 kann es zweckmäßig sein, den Querschnitt der Austrittsöffnungen 6a mit zunehmender Entfernung vom Flüssigkeitseintritt zu vergrößern. Dadurch wird eine gleichmäßigere Verteilung der Flüssigkeit auf die hintereinander folgenden Plattenzwischenräume erreicht.

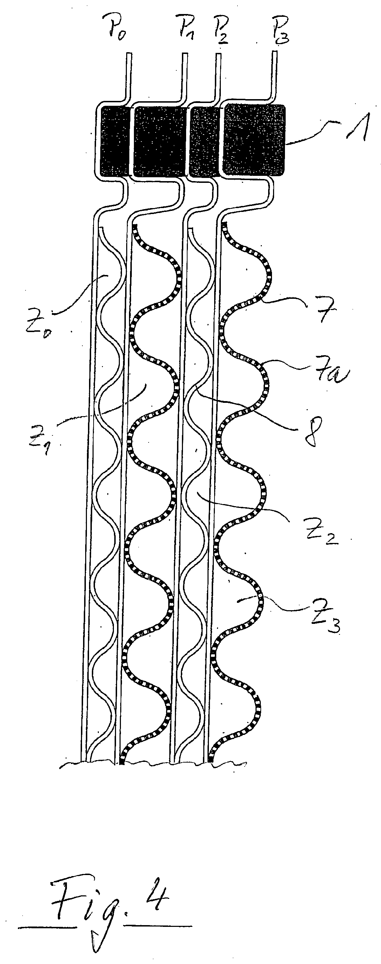

Figur 4 zeigt einen horizontalen Schnittbereich durch mehrere Platten. Dabei sind in den Plattenzwischenräumen Abstandhalter 7 bzw. 8 in Form gewellter Einlagen angeordnet. Die Abstandhalter sind so dimensioniert, dass sie an beiden benachbarten Platten anliegen und somit eine Abstützung der Platten quer zur Plattenebene bewirken. Dadurch wird ein Ausbeulen der Platten bei hohen Differenzdrücken zwischen benachbarten Plattenzwischenräumen vermieden.

Dabei sind die Abstandhalter, die in denjenigen Plattenzwischenräumen angeordnet sind, die von zu vermischenden Fluiden durchströmt werden - im Ausführungsbeispiel die Abstandhalter 7 - mit einer Vielzahl von Öffnungen 7a versehen. Dadurch können die Fluide durch den Abstandhalter 7 hindurchtreten, wodurch ihre Vermischung begünstigt wird.

Außerdem zeigt Figur 4, dass die Plattenzwischenräume - anders als in Figur 3 dargestellt - unterschiedliches Spaltmaß aufweisen können. Insbesondere können die von den zu vermischenden Fluiden durchströmten Plattenspalte eine größere Spaltweite aufweisen als die von einem Heiz- oder Kühlmedium durchströmten oder stillgelegte Plattenspalte.

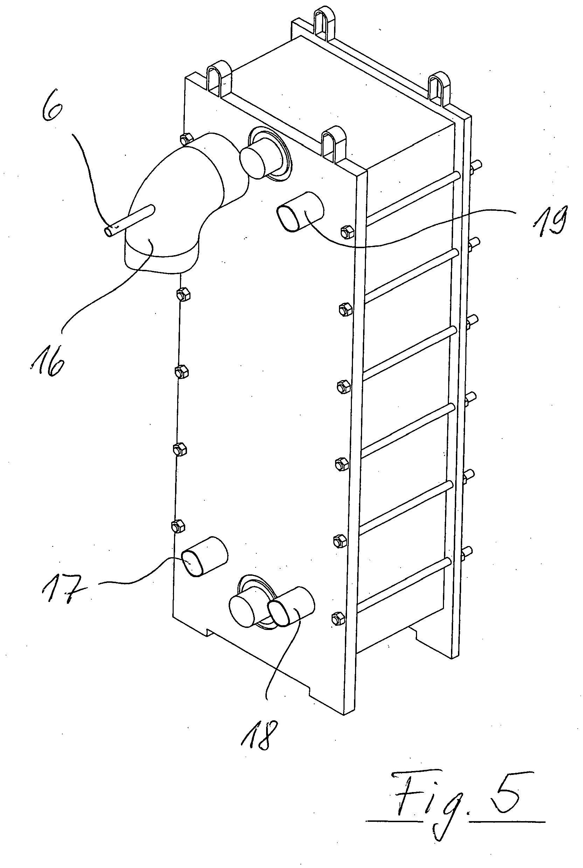

Figur 5 zeigt eine Schrägansicht auf einen kompletten Plattenapparat zur Anwendung bei einem Absorptionsvorgang. Dabei ist wie in Figur 1 im linken oberen Bereich die Zuführung des gas- oder dampfförmigen Arbeitsmittels und des mit ihm zu vermischenden Lösungsmittels vorgesehen. Während das Lösungsmittel der Verteillanze 6 zugeführt wird, erfolgt die Zufuhr des Arbeitsmittels über einen Rohrkrümmer 16. Die Verteillanze 6, die im Inneren der Plattenbohrungen 2 verläuft, ist gegenüber dem Rohrkrümmer 16 abgedichtet und durchquert ihn an geeigneter Stelle. Dadurch können das Arbeitsmittel und das Lösungsmittel getrennt zugegeben werden und die Vermischung beider Fluide beginnt erst unmittelbar oberhalb der Platten.

Am linken unteren Rand tritt die mit Arbeitsmittel angereicherte Lösung an einem Rohrstutzen 17 aus dem Plattenapparat aus.

Anschlussstutzen 18 und 19 sind den Durchströmöffnungen 3 und 4 in Figur 1 zugeordnet und dienen zum Eintritt bzw. Austritt von Kühlwasser, das die beim Absorptionsvorgang frei werdende Wärme aufnimmt.

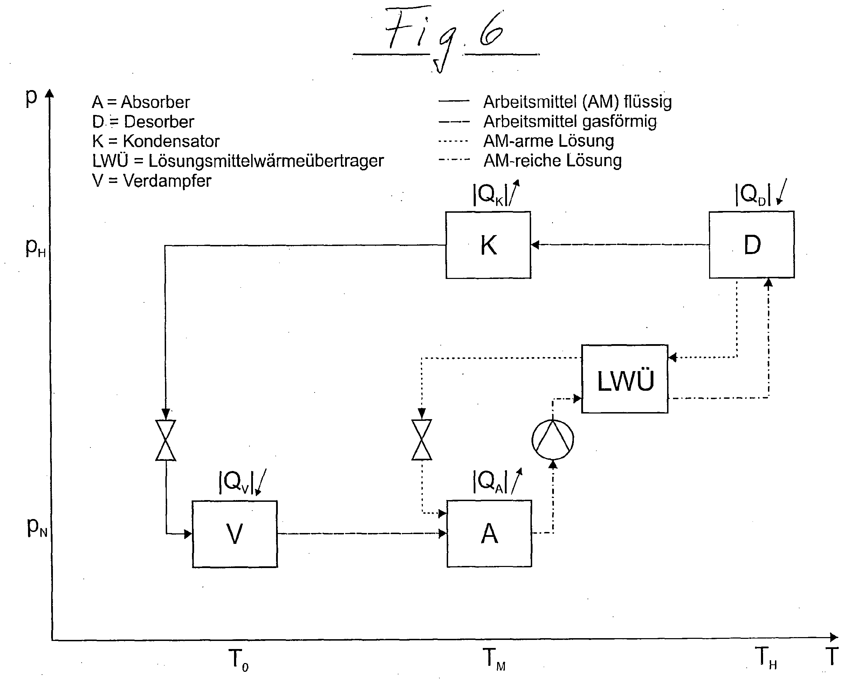

Figur 6 zeigt die bevorzugte Anwendung des Plattenapparates im Rahmen eines Absorptionsvorganges - in dem dargestellten Ausführungsbeispiel bei einer Absorptionskältemaschine, jedoch ist die Verwendung gleichermaßen bei einer Absorptionswärmepumpe zweckmäßig.

Die Funktion von Absorptions-Kältemaschinen oder -Wärmepumpen ist bekannter Stand der Technik und wird daher nicht im Detail beschrieben. Wesentlich im vorliegenden Zusammenhang ist die Ausbildung des Absorbers, der in Figur 6 durch das Bezugszeichen "A" markiert ist. Ihm wird ein geeignetes Arbeitsmittel in gas- oder dampfförmiger Konsistenz zugeführt. Dieses Arbeitsmittel soll mit einem Lösungsmittel vermischt werden, damit es zwischen beiden Fluiden zu einem Absorptionsvorgang kommt. Dazu wird das Lösungsmittel, das meist eine relativ zähflüssige Konsistenz hat, der Verteillanze 6 zugeführt, wogegen das gas- oder dampfförmige Arbeitsmittel in dem die Verteillanze umgebenden Raum zugegeben wird. Die Vermischung beider Fluide erfolgt dann in den sogenannten zweiten Plattenzwischenräumen, wobei durch die Flüssigkeitsverteilung über die Breite der Platten-Zwischenräume eine große Reaktionsfläche zwischen dem Arbeitsmittel und dem Lösungsmittel bereitgestellt wird. Dadurch kommt es beim Durchqueren der Plattenzwischenräume zu einer starken Absorption des Arbeitsmittels durch das Lösungsmittel und nach dem Durchströmen der Plattenzwischenräume ist das Lösungsmittel stark mit Arbeitsmittel angereichert, wenn es den Plattenzwischenraum am unteren Ende verlässt.

Die beim Absorptionsvorgang frei werdende Prozesswärme Q_{A} wird durch ein in den genannten ersten Plattenzwischenräumen strömendes Fluid aufgenommen und abgeführt.

Vorliegend wurde die Verwendung im Zusammenhang mit einem Absorptionsprozess beschrieben. Es liegt aber gleichermaßen im Rahmen der Erfindung, den Plattenapparat für chemische Reaktionen zu verwenden, bei denen unterschiedliche Medien innerhalb eines Plattenspaltes vermischt werden sollen.

## Patentansprüche

1. Plattenapparat zum Wärme- und/oder Stoffaustausch mit einer Vielzahl fluchtend längs einer Umfangsdichtung (1) unter Bildung jeweils eines Zwischenraumes (Z₀, Z₁, Z₂, Z₃) aneinander liegender Platten (P₀, P₁, P₂, P₃), die obere Durchströmöffnungen (2, 3) und untere Durchströmöffnungen (4, 5) für Fluide aufweisen, wobei eine Gruppe dieser oberen und unteren Durchströmöffnungen (2, 5) zumindest zwei zu vermischenden Fluiden zugeordnet und durch entsprechend verlegte Dichtungen mit jedem zweiten Plattenzwischenraum (Z₁, Z₃) verbunden ist, der von oben nach unten durchströmt wird und wobei in fluchtenden oberen Durchströmöffnungen (2) der Platten (P₀, P₁, P₂, P₃) eine sie durchquerende Verteillanze (6) mit Austrittsöffnungen (6a) für zumindest eines der genannten Fluide verläuft,
**dadurch gekennzeichnet,**
**dass** die Austrittsöffnungen (6a) der Verteillanze (6) in diejenigen Plattenzwischenräume (Z₀, Z₂) gerichtet sind, die zwischen den genannten zweiten Plattenzwischenräumen (Z₁, Z₃) für die zu vermischenden Fluide angeordnet sind.

2. Plattenapparat nach Anspruch 1,
**dadurch gekennzeichnet,**
**dass** die Austrittsöffnungen (6a) etwa radial nach unten gerichtet und in den genannten Plattenzwischenräumen (Z₀, Z₂) positioniert sind.

3. Plattenapparat nach Anspruch 1,
**dadurch gekennzeichnet,**
**dass** die Durchtrittsöffnungen (2) für die Verteillanze (6) einen etwa horizontal verlaufenden unteren Rand (2b) aufweisen.

4. Plattenapparat nach Anspruch 3,
**dadurch gekennzeichnet,**
**dass** der horizontal verlaufende untere Rand (2b) eine Länge von zumindest 60 %, vorzugsweise 75 % des Durchmessers der Durchströmöffnung (2) aufweist.

5. Plattenapparat nach Anspruch 1,
**dadurch gekennzeichnet,**
**dass** die Platten (P₀, P₁, P₂, P₃) unterhalb der die Verteillanze (6) umgebenden Durchströmöffnungen (2) zumindest eine kleinere Entleerungsöffnung (10) aufweisen.

6. Plattenapparat nach Anspruch 5,
**dadurch gekennzeichnet,**
**dass** die Entleerungsöffnung (10) im tiefsten Bereich oberhalb der die Durchströmöffnung (2) umgebenden Dichtung (2a) positioniert sind.

7. Plattenapparat nach einem der vorhergehenden Ansprüche,
**dadurch gekennzeichnet,**
**dass** die Verteillanze (6) einem Fluid in flüssiger Phase zugeordnet ist.

8. Plattenapparat nach einem der vorhergehenden Ansprüche,
**dadurch gekennzeichnet,**
**dass** der die Verteillanze (6) umgebende Bereich der Durchströmöffnungen (2) einem Fluid in der Gas-Phase zugeordnet ist.

9. Plattenapparat nach einem der Ansprüche 1 bis 6,
**dadurch gekennzeichnet,**
**dass** bei zwei miteinander zu vermischenden Flüssigkeiten die Verteillanze (6) der zähflüssigeren Flüssigkeit zugeordnet ist.

10. Plattenapparat nach einem der vorhergehenden Ansprüche,
dass die der Verteillanze (6) zugeordnete Flüssigkeit eine zur Absorption eines anderen Fluides geeignete Flüssigkeit ist.

11. Plattenapparat nach Anspruch 10,
**dadurch gekennzeichnet,**
**dass** die der Verteillanze (6) zugeordnete Flüssigkeit eine ionische Flüssigkeit ist.

12. Plattenapparat nach einem der vorhergehenden Ansprüche,
**dadurch gekennzeichnet,**
**dass** diejenigen Plattenzwischenräume (Z₁, Z₃) die benachbart zu den vorgenannten zweiten Plattenzwischenräumen (Z₀, Z₂) angeordnet sind, an ein Heiz- oder Kühlmedium anschließbar sind.

13. Plattenapparat nach einem der vorhergehenden Ansprüche,
**dadurch gekennzeichnet,**
**dass** zumindest die den zu vermischenden Fluiden zugeordneten Plattenzwischenräume (Z₁, Z₃) einen Abstandhalter (7) enthalten.

14. Plattenapparat nach Anspruch 13,
**dadurch gekennzeichnet,**
**dass** der Abstandhalter (7) als Wellenprofil ausgebildet ist.

15. Plattenapparat nach Anspruch 13 oder 14,
**dadurch gekennzeichnet,**
**dass** der Abstandhalter (7) eine Vielzahl von Durchtrittsöffnungen (7a) aufweist.

16. Verwendung des Plattenapparates gemäß einem oder mehreren der vorhergehenden Ansprüche als Absorber.

17. Verwendung nach Anspruch 16,
**dadurch gekennzeichnet,**
**dass** zwei den Absorptionsprozess durchführende Fluide den genannten zweiten Plattenzwischenräumen (Z₁, Z₃) zugeordnet sind und eines der beiden Fluide durch die Verteillanze (6) strömt.

18. Verwendung nach Anspruch 17,
**dadurch gekennzeichnet,**
**dass** das flüssige oder das dickflüssigere Fluid durch die Verteillanze (6) strömt.

19. Verwendung nach Anspruch 17 oder 18,
**dadurch gekennzeichnet,**
**dass** das gas- oder dampfförmige Fluid in den die Verteillanze (6) umgebenden Raum strömt.

20. Verwendung nach einem der Ansprüche 17 bis 19,
**dadurch gekennzeichnet,**
**dass** das flüssige Fluid eine ionische Flüssigkeit ist.

## Claims

1. Plate apparatus for heat and/or mass transfer, having a multiplicity of plates (P₀, P₁, P₂, P₃) arranged in alignment one next to the other along a peripheral seal (1) to form respective interspaces (Z₀, Z₁, Z₂, Z3), which plates have upper throughflow openings (2, 3) and lower throughflow openings (4, 5) for fluids, wherein a group of those upper and lower throughflow openings (2, 5) is assigned to at least two fluids to be mixed together and is connected by appropriately arranged seals to every second plate interspace (Z₁, Z₃), through which flow takes place from top to bottom, and wherein in aligned upper throughflow openings (2) of the plates (P₀, P₁, P₂, P₃) a distributor lance (6) runs transversely through those openings, which distributor lance has outlet openings (6a) for at least one of the said fluids,
**characterised in that**
the outlet openings (6a) of the distributor lance (6) are directed into those plate interspaces (Z₀, Z₂) which are arranged between the said second plate interspaces (Z₁, Z₃) for the fluids to be mixed together.

2. Plate apparatus according to claim 1,
**characterised in that**
the outlet openings (6a) are directed approximately radially downwards and are positioned in the said plate interspaces (Z₀, Z₂).

3. Plate apparatus according to claim 1,
**characterised in that**
the through-openings (2) for the distributor lance (6) have an approximately horizontally extending lower edge (2b).

4. Plate apparatus according to claim 3,
**characterised in that**
the horizontally extending lower edge (2b) has a length of at least 60 %, preferably 75 %, of the diameter of the throughflow opening (2).

5. Plate apparatus according to claim 1,
**characterised in that**
the plates (P₀, P₁, P₂, P₃) have at least one relatively small drainage opening (10) below the throughflow openings (2) that surround the distributor lance (6).

6. Plate apparatus according to claim 5,
**characterised in that**
the drainage opening (10) is positioned in the lowest region above the seal (2a) that surrounds the throughflow opening (2).

7. Plate apparatus according to any one of the preceding claims,
**characterised in that**
the distributor lance (6) is assigned to a fluid in the liquid phase.

8. Plate apparatus according to any one of the preceding claims,
**characterised in that**
the region of the throughflow openings (2) that surrounds the distributor lance (6) is assigned to a fluid in the gaseous phase.

9. Plate apparatus according to any one of claims 1 to 6,
**characterised in that**
when two fluids are to be mixed with one another, the distributor lance (6) is assigned to the more viscous fluid.

10. Plate apparatus according to any one of the preceding claims,
**characterised in that**
the fluid assigned to the distributor lance (6) is a fluid suitable for absorption of another fluid.

11. Plate apparatus according to claim 10,
**characterised in that**
the fluid assigned to the distributor lance (6) is an ionic fluid.

12. Plate apparatus according to any one of the preceding claims,
**characterised in that**
those plate interspaces (Z₁, Z₃) which are arranged adjacent to the afore-mentioned second plate interspaces (Z₀, Z₂) are connectible to a heating or cooling medium.

13. Plate apparatus according to any one of the preceding claims,
**characterised in that**
at least the plate interspaces (Z₁, Z₃) assigned to the fluids to be mixed together contain a spacer (7).

14. Plate apparatus according to claim 13,
**characterised in that**
the spacer (7) is formed as a wave-shaped profile.

15. Plate apparatus according to claim 13 or 14,
**characterised in that**
the spacer (7) has a multiplicity of through-openings (7a).

16. Use of the plate apparatus according to one or more of the preceding claims as an absorber.

17. Use according to claim 16,
**characterised in that**
two fluids performing the absorption process are assigned to the said second plate interspaces (Z₁, Z₃), and one of the two fluids flows through the distributor lance (6).

18. Use according to claim 17,
**characterised in that**
the liquid fluid or the more viscous fluid flows through the distributor lance (6).

19. Use according to claim 17 or 18,
**characterised in that**
the gaseous or vaporous fluid flows into the space surrounding the distributor lance (6).

20. Use according to any one of claims 17 to 19,
**characterised in that**
the liquid fluid is an ionic fluid.

## Revendications

1. Appareil à plaques pour l'échange de chaleur et/ou du substances, comportant une pluralité de plaques (P₀, P₁, P₂, P₃) juxtaposées et alignées les unes avec les autres le long d'un joint d'étanchéité circonférentiel (1) en formant chaque fois un espace intermédiaire (Z₀, Z₁, Z₂, Z₃), qui présentent des ouvertures de passage supérieures (2, 3) et des ouvertures de passage inférieures (4, 5) pour des fluides, un groupe de ces ouvertures de passage supérieures et inférieures (2, 5) étant associé à au moins deux fluides à mélanger et relié, à travers des joints d'étanchéité posées de façon correspondante, à chaque deuxième espace intermédiaire de plaques (Z₁, Z₃) qui est traversé par un courant du haut vers le bas, une lance de distribution (6) munie d'ouvertures de sortie (6a) pour au moins l'un desdits fluides s'étendant dans des ouvertures de passage supérieures (2) alignées des plaques (P₀, P₁, P₂, P₃) en les traversant,
**caractérisé en ce**
**que** les ouvertures de sortie (6a) de la lance de distribution (6) sont dirigées dans les espaces intermédiaires de plaques (Z₀, Z₂) qui sont disposés entre lesdits deuxièmes espaces intermédiaires de plaques (Z₁, Z₃) pour les fluides à mélanger.

2. Appareil à plaques selon la revendication 1,
**caractérisé en ce**
**que** les ouvertures de sortie (6a) sont dirigées sensiblement radialement vers le bas et positionnées dans lesdits espaces intermédiaires de plaques (Z₀, Z₂).

3. Appareil à plaques selon la revendication 1,
**caractérisé en ce**
**que** les ouvertures de passage (2) pour la lance de distribution (6) présentent un bord inférieur (2b) s'étendant sensiblement horizontalement.

4. Appareil à plaques selon la revendication 3,
**caractérisé en ce**
**que** le bord inférieur (2b) s'étendant horizontalement présente une longueur d'au moins 60 %, de préférence de 75 % du diamètre de l'ouverture de passage (2).

5. Appareil à plaques selon la revendication 1,
**caractérisé en ce**
**que** les plaques (P₀, P₁, P₂, P₃) présentent au moins une plus petite ouverture de vidange (10) en dessous des ouvertures de passage (2) entourant la lance de distribution (6).

6. Appareil à plaques selon la revendication 5,
**caractérisé en ce**
**que** l'ouverture de vidange (10) est positionnée dans la zone la plus basse au-dessus du joint d'étanchéité (2a) entourant l'ouverture de passage (2).

7. Appareil à plaques selon l'une des revendications précédentes,
**caractérisé en ce**
**que** la lance de distribution (6) est associée à un fluide en phase liquide.

8. Appareil à plaques selon l'une des revendications précédentes,
**caractérisé en ce**
**que** la zone des ouvertures de passage (2) qui entoure la lance de distribution (6) est associée à un fluide en phase gazeuse.

9. Appareil à plaques selon l'une des revendications 1 à 6,
**caractérisé en ce**
**que** dans le cas de deux liquides à mélanger, la lance de distribution (6) est associée au liquide le plus visqueux.

10. Appareil à plaques selon l'une des revendications précédentes,
**caractérisé en ce**
**que** le liquide associé à la lance de distribution (6) est un liquide adapté à l'absorption d'un autre fluide.

11. Appareil à plaques selon la revendication 10,
**caractérisé en ce**
**que** le liquide associé à la lance de distribution (6) est un liquide ionique.

12. Appareil à plaques selon l'une des revendications précédentes,
**caractérisé en ce**
**que** les espaces intermédiaires de plaques (Z₁, Z₃) qui sont adjacents auxdits deuxièmes espaces intermédiaires de plaques (Z₀, Z₂) peuvent être raccordés à un milieu chauffant ou réfrigérant.

13. Appareil à plaques selon l'une des revendications précédentes,
**caractérisé en ce**
**qu'**au moins les espaces intermédiaires de plaques (Z₁, Z₃) associés aux fluides à mélanger contiennent une entretoise (7).

14. Appareil à plaques selon la revendication 13,
**caractérisé en ce**
**que** l'entretoise (7) est réalisée sous la forme d'un profilé ondulé.

15. Appareil à plaques selon la revendication 13 ou 14,
**caractérisé en ce**
**que** l'entretoise (7) présente une pluralité d'ouvertures de passage (7a).

16. Utilisation de l'appareil à plaques selon l'une ou plusieurs des revendications précédentes comme absorbeur.

17. Utilisation selon la revendication 16,
**caractérisée en ce**
**que** deux fluides exécutant le processus d'absorption sont associés aux dits deuxièmes espaces intermédiaires de plaques (Z₁, Z₃) et l'un des deux fluides s'écoule à travers la lance de distribution (6).

18. Utilisation selon la revendication 17,
**caractérisée en ce**
**que** le fluide liquide ou plus visqueux s'écoule à travers la lance de distribution (6).

19. Utilisation selon la revendication 17 ou 18,
**caractérisée en ce**
**que** le fluide gazeux ou sous forme de vapeur s'écoule dans l'espace entourant la lance de distribution (6).

20. Utilisation selon l'une des revendications 17 à 19,
**caractérisé en ce**
**que** le fluide liquide est un liquide ionique.
